# EUROPEAN PATENT SPECIFICATION

(11) **EP 3 131 154 B1**
(45) Date of publication and mention of the grant of the patent: **07.11.2018**
(21) Application number: 16182428.9
(22) Date of filing: 02.08.2016
(51) Int. Cl.: H01M 10/625, H01M 10/6555, B60L 11/18, H01M 10/613, H01M 2/10, F28D 21/00

(54) **COOLING FIN, COOLING MODULE COMPRISING THE COOLING FIN AND BATTERY MODULE COMPRISING THE SAME**
KÜHLRIPPE, KÜHLMODUL MIT DER KÜHLRIPPE UND BATTERIEMODUL DAMIT
AILETTE DE REFROIDISSEMENT, MODULE DE REFROIDISSEMENT COMPRENANT L'AILETTE DE REFROIDISSEMENT ET MODULE DE BATTERIE LA COMPRENANT

(30) Priority: 10.08.2015 KR 20150112558
(43) Date of publication of application: 15.02.2017
(73) Proprietor: LG Chem, Ltd., Yeongdeungpo-gu Seoul 07336 (KR)
(72) Inventor: CHOI, Mi-Geum, 34122 Daejeon (KR); CHOI, Hang-June, 34122 Daejeon (KR); CHOI, Jong-Woon, 34122 Daejeon (KR); MUN, Jeong-O, 34122 Daejeon (KR)
(74) Representative: Cabinet Plasseraud

(56) References cited:
- EP-A1- 2 667 428
- WO-A2-2016/159549
- DE-A1-102012 101 141
- US-B1- 7 165 601

## Description

### TECHNICAL FIELD

The present disclosure relates to a cooling fin that does not require flatness management (=straightness management) of a heat transfer portion that contacts a surrounding structure during processing or assembling and that is suitable for dispersing the physical stress that occurs in response to the external environment, thereby minimizing deformation of the heat transfer portion, a cooling module comprising the cooling fin, and a battery module comprising the same.

### BACKGROUND ART

Recently, vehicles are being manufactured based on studies conducted to secure driving force using internal combustion engines and/or electric motors, in order to reduce air pollution from exhaust gas of vehicles. Accordingly, the vehicles have evolved in the order of hybrid vehicles, plug-in hybrid vehicles and electric vehicles. In this case, the hybrid vehicles and plug-in hybrid vehicles have an internal combustion engine, an electric motor and a battery pack, and the electric vehicles have an electric motor and a battery pack, but not an internal combustion engine.

The battery pack has at least one battery module. The battery module has a cooling plate, cooling fins, a cartridge and a battery cell. The cooling fins are arranged on the cooling plate such that they are spaced apart from each other by a predetermined distance, and the cartridge is disposed between the cooling fins. In this case, the cartridge has the battery cell inside it. The cooling fin is made in a panel form, and is arranged to stand on a cooling plate and thus has a heat transfer portion that contacts the cooling plate. The cooling fin contacts the battery cell through the cartridge, and receives heat from the battery cell when the battery cell is being charged or discharged, and then transfers the heat of the battery cell to the cooling plate through the heat transfer portion. DE 10 2012 101141 and WO 2016/159549 disclose a battery module having a cooling fin. US 7 165 601 discloses a cooling fin.

However, since the heat transfer portion is formed by bending an edge at one side of the cooling fin at least once, the cooling fin has the heat transfer portion in a rectangular shape. Here, when the cooling fin is being processed or when the cooling fin and the cooling plate or the cartridge are being assembled, the heat transfer portion is joined to the cooling plate while being affected by external factors (=machining tolerance, assembly tolerance and/or external force). This effect from the external factors imposes physical stress on the heat transfer portion, which does not keep the heat transfer portion having a rectangular shape in its flat state and causes deformation of certain areas of the heat transfer portion.

Such deformation of the heat transfer portion creates a gap between the cooling fin and the cooling plate when the cooling fin and the cooling plate or the cartridge are being joined to each other, and since the gap corresponds to the certain areas of the heat transfer portion, such deformation hinders a quick transfer of the heat of the battery cell from the cooling fin to the cooling plate. Further, the cooling fin imposes physical stress on the area contacting the battery cell in response to a volume increase of the battery cell during charging or discharging of the battery cell, causing deformation of the heat transfer portion when the battery cell is being used.

Moreover, when an electric vehicle is being driven, the cooling fin receives continuous vibrations from the cooling plate and thus physical stress is imposed on the cooling fin, causing deformation of the heat transfer portion. Such deformation of the heat transfer portion separates a portion of the cooling fin from the cooling plate when the cooling plate and the cooling fin are joined to each other during charging or discharging of the battery cell or during driving of the electric vehicle, creating a gap between the cooling fin and the cooling plate. The gap hinders a quick transfer of the heat of the battery cell from the cooling fin to the cooling plate when the battery cell is being used.

### DISCLOSURE

### Technical Problem

The present disclosure is designed to solve the problems of the related art, and therefore the present disclosure is directed to providing a cooling fin suitable for reducing the effects of external factors (=machining tolerance, assembly tolerance and/or external force) during processing or assembling thereof, and for dispersing the physical stress that occurs in response to repeated volume increase of the battery cell during charging or discharging thereof or continuous vibrations during driving of an electric vehicle, thereby minimizing deformation of a heat transfer portion, a cooling module including the cooling fin, and a battery module comprising the same.

### Technical Solution

In one aspect of the present disclosure, there is provided a cooling fin as defined in the claims. The cooling fin includes: a body having a rectangular panel shape; a first extension part protruding from an edge of an upper portion of the body and extending in one direction at a right angle with respect to the body; and a second extension part protruding from an edge of a lower portion of the body and extending in one direction in a step form with respect to the body, wherein the second extension part is divided into a plurality of slits.

According to the present disclosure, surfaces of the body facing the one direction and surfaces of the body facing another direction that is opposite to the one direction may be flat-shaped.

According to the present disclosure, the second extension part includes impact buffer parts, connecting parts and plate contact parts disposed in sequential order by level along the step form from the body towards the lower part of the body.

The impact buffer part, the connecting part and the plate contact part disposed along each of the slits form different angles with each other with respect to the body.

In one aspect, the impact buffer part may be sloped with respect to the body, and may disperse a stress being transferred from the body and transfer the dispersed stress to the connecting part.

In another aspect, the connecting part may be connected with the impact buffer part and be parallel to the body, and may transfer a dispersed stress of the impact buffer part to the plate contact part.

In another aspect, the plate contact part may be connected with the connecting part and may generally form a right angle with respect to the body, and receive a dispersed stress of the impact buffer part through the plate contact part and release the dispersed stress outside thereof.

According to the present disclosure, the first extension part may be disposed along the edge of the upper portion of the body and may have an identical size as a width of the edge of the upper portion, and the second extension part may be disposed along the edge of the lower portion of the body and may have an identical size as a width of the edge of the lower portion.

According to the present disclosure, each of the slits may form a straight line shape when seen from the another direction.

Preferably, each of the slits may extend beyond the second extension part and the edge of the lower portion of the body towards the body.

In one aspect, each of the slits may have a smaller size than a width of the impact buffer part, the connecting part or the plate contact part along the edge of the lower portion of the body.

In another aspect, each of the slits may be open at an end of the plate contact part, and blocked on a periphery of the edge of the lower portion of the body.

According to the present disclosure, the cooling fin may further include a first cartridge coupling part and a second cartridge coupling part disposed on a left edge of the body and on a right edge of the body, respectively, between the edge of the lower portion of the body and the edge of the upper portion of the body, wherein the first extension part, the second extension part, the first cartridge coupling part and the second cartridge coupling part may limit a groove on the body in the one direction.

Preferably, the first cartridge coupling part may protrude from the left edge towards one direction at a right angle with respect to the body, and may be bent parallel to the body to extend in a 'T' shape towards an exterior of the groove.

In one aspect, the second cartridge coupling part may protrude from the right edge towards one direction at a right angle with respect to the body, and may be bent parallel to the body to extend in a band shape towards an exterior of the groove.

In another aspect, on a periphery of corners of the body, the first cartridge coupling part and the second cartridge coupling part may be spaced apart from the first extension part and the second extension part.

In another aspect, the first cartridge coupling part and the second cartridge coupling part may extend from the body in the one direction further than the first extension part, but less than the second extension part.

In another aspect of the present disclosure, there is provided a cooling module including: a cooling plate including a bottom having a plurality of line convex bodies in a central region thereof, and a first buffer part and a second buffer part each disposed at either edge of the bottom, the first buffer part and the second buffer part protruding towards an upper portion of the bottom and being generally parallel to a first line convex body and a second line convex body; and a plurality of cooling fins disposed on the plate such that they are fixated to the first and second buffer parts and to the plurality of line convex bodies, wherein each of the cooling fins is as defined in the claims .

According to the present disclosure, each of the line convex bodies may be configured to be convex on an upper surface of the bottom and concave on a lower surface of the bottom.

Preferably, each of the line convex bodies may have a convex upper surface, and a left sloped surface and a right sloped surface planarly symmetrical to each other on the convex upper surface.

According to the present disclosure, the first buffer part may include a first cartridge align part, a fin fixating part and a second cartridge align part disposed in sequential order along an edge at one side, and the second buffer part may include the second cartridge align part, the fin fixating part and the first cartridge align part disposed in inverse order with respect to the first buffer part along an edge at another side.

Preferably, the first cartridge align part may protrude from the bottom at a right angle and extend in a slope with respect to the bottom in a direction away from the bottom, and extend again at a right angle with respect to the bottom, the fin fixating part may include a first guider protruding at a right angle from the bottom, a second guider connected with the first guider and extending in a slope with respect to the bottom in a direction away from the bottom, and a third guider protruding from the second guider and forming a right angle with the bottom, and the second cartridge align part may protrude from the bottom at a right angle and extends parallel to the bottom in a direction away from the bottom.

In one aspect, heights of the first cartridge align part, the fin fixating part and the second cartridge align part in a right angle direction from the bottom may decrease in sequential order from the bottom.

In another aspect, the first cartridge align part and the second cartridge align part may extend in an identical size from the bottom in a direction away from the bottom, and the fin fixating part may extend in a greater size than the second cartridge align part in a direction away from the bottom.

According to the present disclosure, the impact buffer part, the connecting part and the plate contact part may form different angles with each other with respect to the bottom.

According to the present disclosure, each of the first and second buffer parts may contact one cooling fin, and the second extension part of the cooling fin of the first buffer part and the second extension part of the cooling fin of the second buffer part may be disposed to face the central region of the bottom.

Preferably, the cooling fin of the first buffer part may join the plate contact part to the bottom, the connecting part to a first guider protruding from the bottom on the fin fixating part, and the impact buffer part to a second guider connected with the first guider on the fin fixating part.

In one aspect, the second buffer part may contact the one cooling fin, and the cooling fin of the second buffer part may join the plate contact part to the bottom, the connecting part to a first guider protruding from the bottom on the fin fixating part, and the impact buffer part to a second guider connected with the first guider on the fin fixating part.

According to the present disclosure, each of the line convex bodies may contact two cooling fins, bodies of the two cooling fins may be fixated surface-to-surface with respect to each other, and the second extension parts of the two cooling fins of the each line convex body may be disposed to face the first buffer part and the second buffer part, respectively.

Preferably, one of the cooling fins may be disposed at a left side of a convex upper surface of the each line convex body, and join the plate contact part to the bottom of the cooling plate and the connecting part and the impact buffer part to a left sloped surface of the convex upper surface, and rest of the cooling fins may be disposed at a right side of the convex upper surface of the each line convex body, and join the plate contact part to the bottom of the cooling plate and the connecting part and the impact buffer part to a right sloped surface of the convex upper surface.

According to the present disclosure, the cooling module may further include one cooling fin between the first buffer part and the line convex body directly neighboring the first buffer part, wherein, between the first buffer part and the line convex body, the second extension part of the cooling fin may be disposed to face the central region of the bottom.

Preferably, the cooling fin between the first buffer part and the line convex body may join the plate contact part to the bottom of the cooling plate.

In another aspect of the present disclosure, there is provided a battery module as defined in the claims .

### Advantageous Effects

The present disclosure gives the following effects. A cooling fin according the present disclosure is equipped with a plurality of slits on a heat transfer portion protruding from an edge at one side of the cooling fin in a step form so as to reduce the effects of external factors (=machining tolerance and/or external force) through a plurality of sections of the heat transfer portion, thereby minimizing deformation of the heat transfer portion, and thus there is no need for flatness management (=straightness management) of the heat transfer portion.

A cooling module according to the present disclosure is equipped with a plurality of sections on a heat transfer portion of a cooling fin and a curved shape on a bottom of a cooling pate, and is configured to disperse the physical stress imposed on the cooling fin in an assembling process through the plurality of sections when the cooling fin and the cooling plate are being joined to each other, and thus prevents deformation of the heat transfer portion and maintains a fine matching configuration of the heat transfer portion in accordance with the curved shape, removing the gaps between the cooling fin and the cooling plate.

A battery module according to the present disclosure increases working allowance corresponding to the curved shape of the bottom of the cooling plate through each of the sections of the heat transfer portion of the cooling fin, and minimizes the physical stress of the cooling fin that occurs in response to repeated volume increase of the battery cell when the battery cell is being used or continuous vibrations when an electric vehicle is being driven, thereby preventing deformation of the heat transfer portion, preventing the cooling fin from being separated from the cooling plate.

### DESCRIPTION OF DRAWINGS

The accompanying drawings illustrate preferred embodiments of the present disclosure and, together with the foregoing disclosure, serve to provide further understanding of the technical features of the present disclosure. However, the present disclosure is not to be construed as being limited to the drawings.
Fig. 1 is a perspective view illustrating a cooling plate according to an embodiment of the present disclosure.
Fig. 2 is a side view illustrating the cooling plate seen from direction 'A' in Fig. 1.
Fig. 3 is a plan view and a side view illustrating a cooling fin according to an embodiment of the present disclosure,
Fig. 4 is an enlarged side view of the cooling fin of Fig. 3.
Fig. 5 is a perspective view illustrating the cooling fin of Fig. 3.
Fig. 6 is a perspective view illustrating a cooling module according to an embodiment of the present disclosure.
Fig. 7 is a side view illustrating the cooling module seen from direction 'A' in Fig. 6.
Fig. 8 is a perspective view illustrating a battery module according to an embodiment of the present disclosure.
Fig. 9 is a side view illustrating the battery module seen from direction 'A' of Fig. 8.
Fig. 10 is a plan view illustrating the battery module from direction 'B' of Fig. 8.
Fig. 11 is a cross-sectional view illustrating the battery module taken on cutting plane line I-I' of Fig. 8.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, and not intended to limit the scope of the disclosure, so it should be understood that other equivalents and modifications could be made thereto without departing from the scope of the disclosure.

In the embodiments disclosed hereinafter, a battery cell refers to a lithium secondary battery. The "lithium secondary battery" as used herein encompasses a secondary battery in which lithium ions act as the operating ions and thereby inducing electrochemical reaction in the positive electrode and the negative electrode during charging and discharging. However, the present disclosure is obviously not limited to the types of batteries.

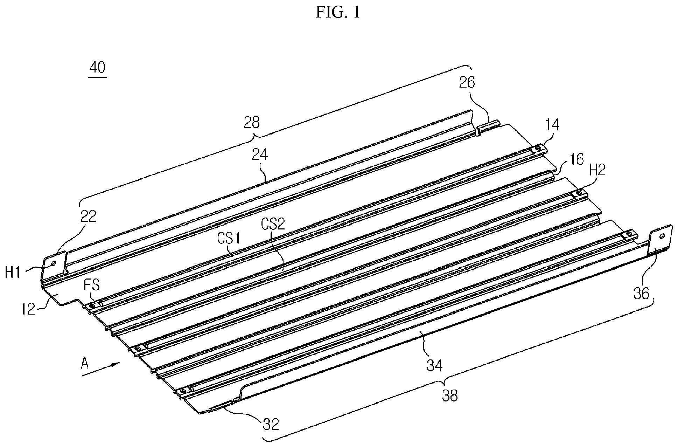

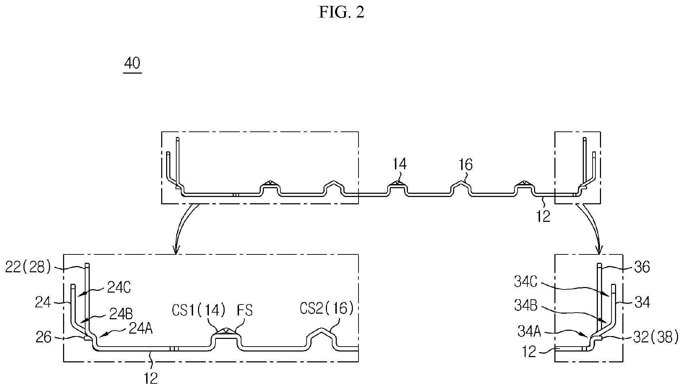

Fig. 1 is a perspective view illustrating a cooling plate according to an embodiment of the present disclosure, and Fig. 2 is a side view illustrating the cooling plate from direction 'A' of Fig. 1.

Referring to Figs. 1 and 2, the cooling plate 40 is made of a metal material, and includes a bottom 12, a first buffer part 28, and a second buffer part 38. The bottom 12 includes a plurality of first line convex bodies 14 and a plurality of second line convex bodies 16 arranged alternately to each other. Preferably, the plurality of second line convex bodies 16 are disposed between the plurality of first line convex bodies 14.

In one aspect, the first and second line convex bodies 14, 16 are configured to be convex on an upper surface of the bottom 12 and concave on a lower surface of the bottom 12. In more detail, the first line convex body 14 has a convex upper surface CS1 in a central region and a flat upper surface FS at both ends thereof. The second line convex body 16 has a convex upper surface CS2 in all of the central region and both ends thereof.

Here, the convex upper surface CS1 of the first line convex body 14 has an identical shape as the convex upper surface CS2 of the second line convex body 16. The convex upper surface CS1 of the first line convex body 14 has a left sloped surface and a right sloped surface planarly symmetrical to each other. Similarly, the convex upper surface CS2 of the second line convex body 16 has a left sloped surface and a right sloped surface planarly symmetrical to each other.

The first buffer part 28 and the second buffer part 38 are each disposed at either edge of the bottom 12 such that they protrude towards the upper portion of the bottom 12 and are generally parallel to the first and second line convex bodies 14, 16. Meanwhile, the first buffer part 28 includes a first cartridge align part 22, a fin fixating part 24 and a second cartridge align part 26 disposed in sequential order along an edge at one side of the bottom 12.

Similarly, the second buffer part 38 includes a second cartridge align part 32, a fin fixating part 34 and a first cartridge align part 36 disposed in inverse order with respect to the first buffer part 28 along an edge at another side of the bottom 12. Here, the first cartridge align part 22 has an identical shape as the first cartridge align part 36. The fin fixating part 24 has an identical shape as the fin fixating part 34.

The second cartridge align part 26 has an identical shape as the second cartridge align part 32. Therefore, the explanation on the first cartridge align part 22, the fin fixating part 24 and the second cartridge align part 26 may also apply to the second cartridge align part 32, the fin fixating part 34 and the first cartridge align part 36 in a substantially same manner. Preferably, the first cartridge align part 22 slightly protrudes from the bottom 12 at a right angle, extends in a slope with respect to the bottom 12 in a direction away from the bottom 12, and then extends again at a right angle with respect to the bottom 12.

The fin fixating part 24 includes a first guider 24A that protrudes at a right angle from the bottom 12, a second guider 24B that is connected with the first guider 24A and extends in a direction away from the bottom 12 in a slope with respect to the bottom 12, and a third guider 24C that protrudes from the second guider 24B and forms a right angle with the bottom 12.

Here, the first guider 24A, the second guider 24B and the third guider 24C of the fin fixating part 24 have an identical shape as the first guider 34A, the second guider 34B and the third guider 34C of the fin fixating part 34, respectively. Further, the second cartridge align part 26 slightly protrudes from the bottom 12 at a right angle and extends parallel to and in a direction away from the bottom 12.

In one aspect, heights of the first cartridge align part 22, the fin fixating part 24 and the second cartridge align part 26 in a right angle direction from the bottom 12 decrease in sequential order from the bottom. In another aspect, the first cartridge align part 22 and the second cartridge align part 26 extend from the bottom 12 towards a left direction of the bottom 12 by a substantially identical size, and the fin fixating part 24 extends towards a left direction of the bottom 12 by a greater size than the first and second cartridge align parts 22, 26.

Meanwhile, on the first buffer part 28 and the second buffer part 38, each of the first cartridge align parts 22, 36 has a first module coupling hole H1, and each of the first line convex bodies 14 has second module coupling holes H2 at both ends thereof.

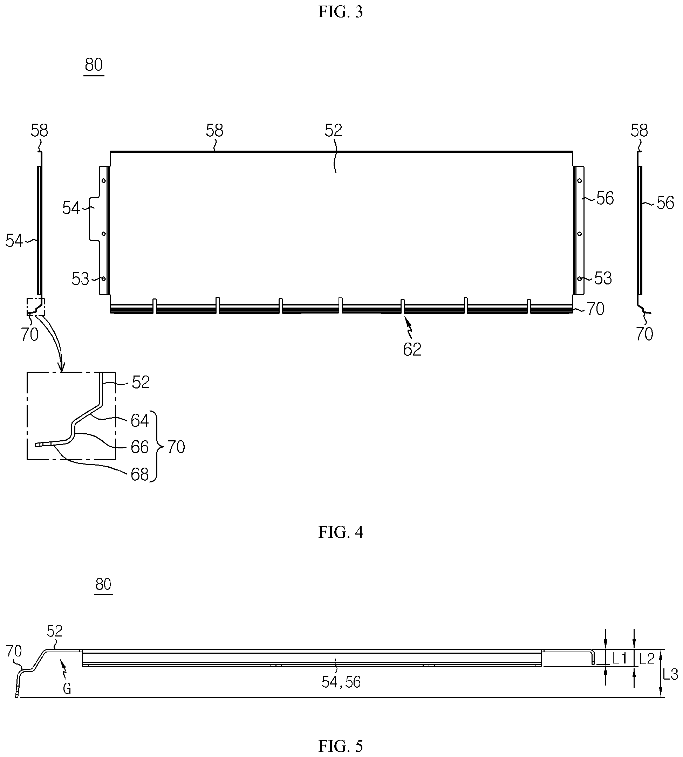

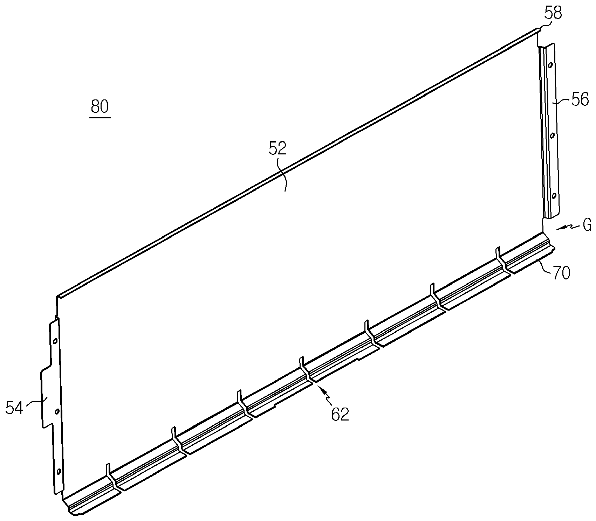

Fig. 3 is a plan view and a side view illustrating a cooling fin according to an embodiment of the present disclosure. Further, Fig. 4 is an enlarged side view of the cooling fin of Fig. 3, and Fig. 5 is a perspective view of the cooling fin of Fig. 3.

Referring to Figs. 3 to 5, the cooling fin 80 is made of a metal material, and includes a body 52, a first cartridge coupling part 54, a second cartridge coupling part 56, a first extension part 58 and a second extension part 70. The body 52 is made in a rectangular panel shape. Preferably, a surface of the body 52 facing one direction (=direction towards the drawing) and a surface of the body 52 facing another direction (=direction from the drawing) are flat-shaped.

The first cartridge coupling part 54, the second cartridge coupling part 56, the first extension part 58 and the second extension part 70 limit a groove G on the body 52 in one direction. The first cartridge coupling part 54 and the second cartridge coupling part 56 are disposed on a left edge and on a right edge of the body 52, respectively.

Preferably, the first cartridge coupling part 54 protrudes from the left edge in one direction at a right angle with respect to the body 52, and is bent parallel to the body 52 to extend towards an exterior of the groove G. Further, the second cartridge coupling part 56 protrudes from the right edge in one direction at a right angle with respect to the body 52, and is bent parallel to the body 52 to extend towards the exterior of the groove G. When seen from the one direction, the first cartridge coupling part 54 has a 'T' shape, and the second cartridge coupling part 56 has a band shape.

In one aspect, the first cartridge coupling part 54 and the second cartridge coupling part 56 are spaced apart from the first extension part 58 and the second extension part 70 on the periphery of corners of the body 52. In another aspect, each of the first cartridge coupling part 54 and the second cartridge coupling part 56 has a plurality of coupling holes 53. The first extension part 58 protrudes from an edge of an upper portion of the body 52 and extends in one direction at a right angle with respect to the body 52.

Preferably, the first extension part 58 is disposed along the edge of the upper portion of the body 52 and has a substantially identical size as a width of the edge of the upper portion. The second extension part 70 protrudes from an edge of a lower portion of the body 52 and extends in one direction in a step form with respect to the body 52.

Here, the second extension part 70 is divided into a plurality of slits 62, and includes impact buffer parts 64, connecting parts 66 and plate contact parts 68 disposed in sequential order by level in a step form from the body 52 towards the lower part of the body 52. Each of the slits 62 has a straight line shape when seen from another direction. The impact buffer part 64, the connecting part 66 and the plate contact part 68 disposed along each of the slits 62 form different angles with each other with the body 52.

Specifically, the impact buffer part 64 is sloped with respect to the body 52, and disperses the stress being transferred from the body 52 and transfers the dispersed stress to the connecting part 66. The connecting part 66 is connected with the impact buffer part 64 and is parallel to the body 52, and continuously transfers the dispersed stress of the impact buffer part 64 to the plate contact part 68. The plate contact part 68 is connected with the connecting part 66 and generally forms a right angle with the body 52, and receives the dispersed stress of the impact buffer part 64 through the plate contact part 68 and releases the dispersed stress outside, for example, to the bottom 12 of the cooling plate (40 in FIG. 1).

The impact buffer part 64, the connecting part 66 and the plate contact part 68 are capable of performing an up-and-down motion elastically with respect to the body 52. Preferably, the second extension part 70 is disposed along an edge of a lower portion of the body 52, and has a substantially identical size as a width of the edge of the lower portion.

Meanwhile, the first extension part 58 extends from the body 52 in one direction by as much as a first length L1, the first and second cartridge coupling parts 54, 56 extend from the body 52 in one direction by as much as a second length L2, and the second extension part 70 extends from the body 52 in one direction by as much as a third length L3. Sizes of the first to third lengths L1, L2, L3 increase in sequential order.

Therefore, the first and second cartridge coupling parts 54, 56 extend from the body 52 in one direction further than the first extension part 58, but less than the second extension part 70. Further, each of the slits 62 has a smaller size than a width of an elasticity applied part 62, a shape maintaining part 66 or the plate contact part 68 along the edge of the lower portion. Preferably, each of the slits 62 extends beyond the second extension part 70 and the edge of the lower portion of the body 52 towards the body 52. In one aspect, each slit 62 is open at an end of the plate contact part 68, and blocked on the periphery of the edge of the lower portion of the body 52.

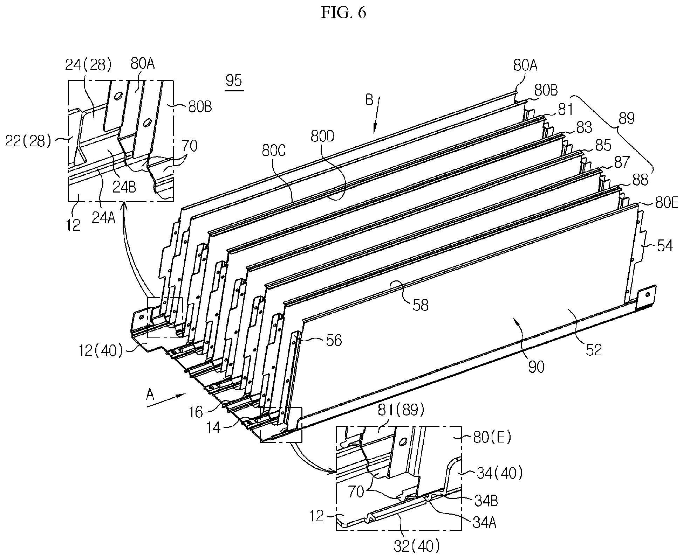

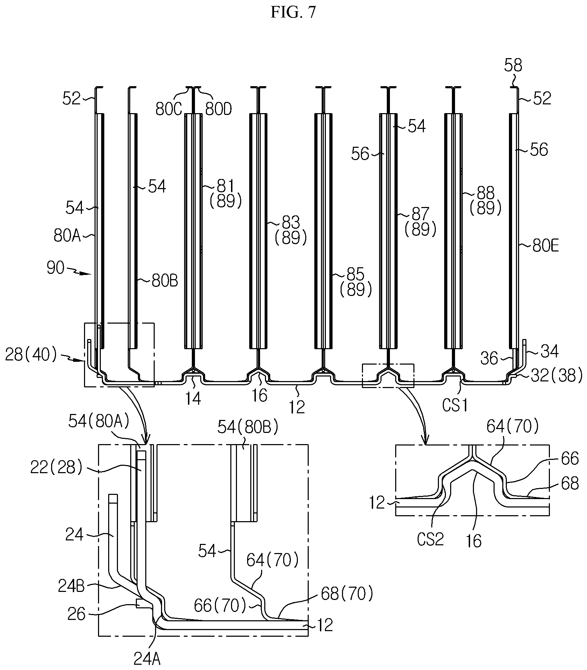

Fig. 6 is a perspective view illustrating a cooling module according to an embodiment of the present disclosure, and Fig. 7 is a side view illustrating the cooling module in direction 'A' of Fig. 6.

Referring to Figs. 6 and 7, the cooling module 95 includes the cooling plate 40 and a cooling fin structure 90. The cooling plate 40 was already explained hereinabove with reference to Figs. 1 and 2. The cooling fin structure 90 includes a first and second cooling fins 80A, 80B, a cooling assembly fin set 89 and a fifth cooling fin 80E disposed in sequential order from a left side of the cooling plate 40 towards a right side of the cooling plate 40.

Here, the cooling assembly fin set 89 consists of a first to fifth cooling assembly fins 81, 83, 85, 87, 88 each of which consists of a third and fourth cooling fins 80C, 80D, the third and fourth cooling fins 80C, 80D fixated with respect to each other. Each of the first to fifth cooling fins 80A, 80B, 80C, 80D, 80E has a substantially identical shape as the cooling fin 80 in Figs. 3 to 5.

Therefore, each of the first to fifth cooling fins 80A, 80B, 80C, 80D, 80E includes the impact buffer parts 64, the connecting parts 66 and the plate contact parts 68 disposed in sequential order by level in a step form from the body 52 towards the lower part of the body 52 in the second extension part 70.

Meanwhile, in terms of the coupling relationship between configurative elements of the cooling module 95, the first cooling fin 80A is joined and fixated to the bottom 12 and to the first buffer part 28 on the cooling plate 40. The bottom 12, the first buffer part 28 and the first cooling fin 80A are fixated using an adhesive or by welding.

Preferably, the first cooling fin 80A joins the plate contact parts 68 to the bottom 12 of the cooling plate 40, the connecting parts 66 to a first guider 24A protruding from the bottom 12 of the cooling plate 40 on the fin fixating part 24 of the first buffer part 28, and the impact buffer parts 64 to a second guider 24B connected with the first guider 24A on the fin fixating part 24.

The second cooling fin 80B is joined and fixated to the bottom 12 of the cooling plate 40 where it directly neighbors the first cooling pin 80A. The bottom 12 and the second cooling fin 80B are joined to each other using an adhesive or by welding. Preferably, the second cooling fin 80B joins the plate contact parts 68 to the bottom 12. Here, each of the first cooling fin 80A and the second cooling fin 80B disposes the first extension part 58 and the second extension part 70 to face the central region of the bottom 12 of the cooling plate 40.

The first to fifth cooling assembly fin 81, 83, 85, 87, 88 are joined and fixated to the bottom 12, three first line convex bodies 14 and two second line convex bodies 16 on the cooling plate 40. The bottom 12, the first and second line convex bodies 14, 16 and the first to fifth cooling assembly fins 81, 83, 85, 87, 88 are joined using an adhesive or by welding.

Preferably, in each of the first to fifth cooling assembly fins 81, 83, 85, 87, 88, the third cooling fin 80C is disposed on a left side of the convex upper surface CS1 of the first line convex body 14 or on a left side of the convex upper surface CS2 of the second line convex body 16, and more specifically, the third cooling fin 80C joins the plate contact parts 68 to the bottom 12 of the cooling plate 40 and the connecting parts 66 and the impact buffer parts 64 to a left sloped surface of the convex upper surface CS1 or the convex upper surface CS2.

Further, the fourth cooling pin 80D is disposed on a right side of the convex upper surface CS1 of the first line convex body 14 or on a right side of the convex upper surface CS2 of the second line convex body 16, and more specifically, the fourth cooling pin 80D joins the plate contact parts 68 to the bottom 12 of the cooling plate 40 and the connecting parts 66 and the impact buffer parts 64 to a right sloped surface of the convex upper surface CS1 or the convex upper surface CS2.

In one aspect, the body 52 of the third cooling fin 80C is joined and fixated surface-to-surface to the body 52 of the fourth cooling fin 80D. The third and fourth cooling fins 80C, 80D are joined using an adhesive or by welding. In another aspect, the first extension part 58 and the second extension part 70 of the third cooling fin 80C are disposed to face the first buffer part 28, and the first extension part 58 and the second extension part 70 of the fourth cooling fin 80D are disposed to face the second buffer part 38.

In another aspect, the third cooling fin 80C and the fourth cooling fin 80D have a first cartridge coupling part 54 and a second cartridge coupling part 56 forming an 'n' shape on both ends of the first line convex body 14 or the second line convex body 16 when seen from direction 'B' of Fig. 6. The fifth cooling fin 50E is joined and fixated to the bottom 12 and the second buffer part 38 on the cooling plate 40. The bottom 12, the second buffer part 38 and the fifth cooling fin 50E are joined using an adhesive or by welding.

Preferably, the fifth cooling fin 80E joins the plate contact parts 68 to the bottom 12 of the cooling plate 40, the connecting parts 66 to the first guider 34A protruding from the bottom 12 on the fin fixating part 34 of the second buffer part 38, and the impact buffer parts 64 to the second guider 34B connected with the first guider 34A on the fin fixating part 34. The fifth cooling fin 80E disposes the first extension part 58 and the second extension part 70 to face the central region of the bottom 12 of the cooling plate 40.

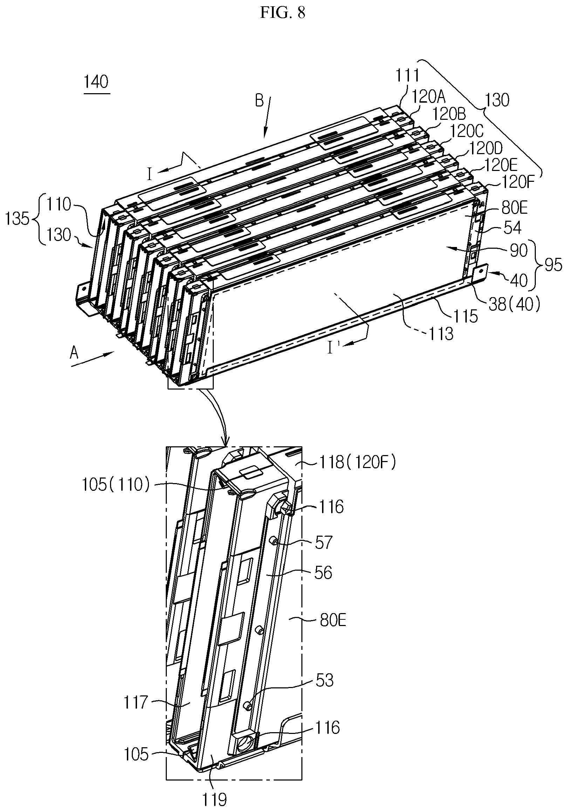

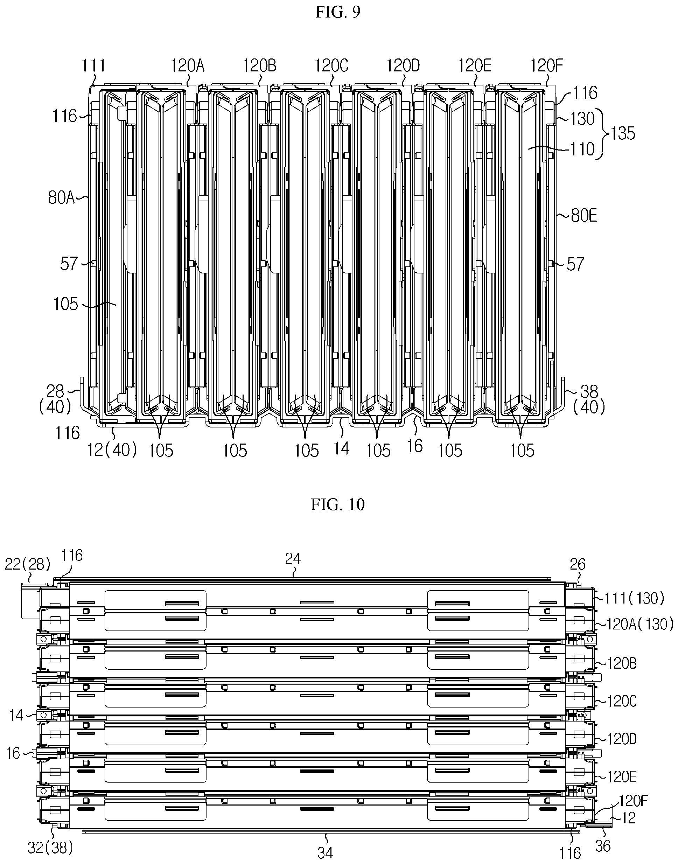

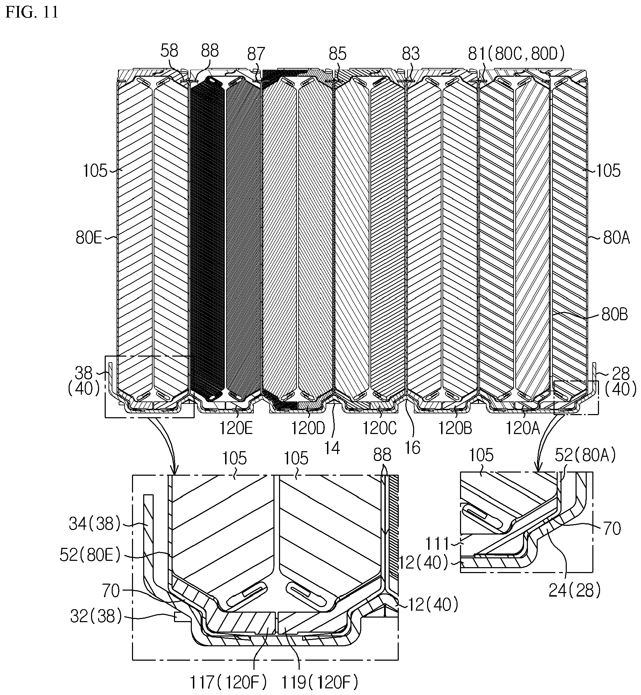

Fig. 8 is a perspective view illustrating a battery module according to an embodiment of the present disclosure, and Fig. 9 is a side view illustrating the battery module from direction 'A' of Fig. 8. Further, Fig. 10 is a plan view illustrating the battery module from direction 'B' of Fig. 8, and Fig. 11 is a cross-sectional view illustrating the battery module taken on cutting-plane line I-I' of Fig. 8.

Referring to Figs. 8 to 11, the battery module 140 includes the cooling module 95 and a battery assembly 135. The cooling module 95 was already explained hereinabove with reference to Figs. 6 and 7. The battery assembly 135 includes a cartridge structure 130 and a battery cell structure 110. The cartridge structure 130 includes a mounting cartridge 111, and a first to sixth cartridges 120A, 120B, 120C, 120D, 120E, 120F.

The mounting cartridge 111 is disposed between the first cooling fin 80A and the second cooling fin 80B. The first to sixth cartridges 120A, 120B, 120C, 120D, 120E, 120F are disposed between the second cooling fin 80B, the first to fifth cooling assembly fins 81, 83, 85, 87, 88 and the fifth cooling fin 80E. Preferably, each of the first to sixth cartridges 120A, 120B, 120C, 120D, 120E, 120F consists of one pair of accommodating and covering cartridges 117, 119.

Therefore, six pairs of accommodating and covering cartridges 117, 119 may be disposed between the second cooling fin 80B, the first to fifth cooling assembly fins 81, 83, 85, 87, 88 and the fifth cooling fin 80E. Here, each of the mounting cartridge 111, the accommodating cartridge 117 and the covering cartridge 119 has a cross-section structure of an 'n' shape when seen from both ends of the first and second line convex bodies 14, 16 of the cooling plate 40.

Preferably, the mounting cartridge 111 has a greater size than each of the accommodating and covering cartridges 117, 119 towards the central region of the bottom 12 of the cooling plate 40. In one aspect, the mounting cartridge 111 is open towards the central region of the bottom 12 on the cooling plate 40. In another aspect, the accommodating and covering cartridges 117, 119 are open towards each other, and are coupled to each other by edges thereof that face each other.

In another aspect, the mounting cartridge 111 and the accommodating and covering cartridges 117, 119 of the first cartridge 120A directly neighboring the mounting cartridge 111 are coupled to each other by the accommodating cartridge 117. Further, each of the mounting cartridge 111, the accommodating cartridge 117 and the covering cartridge 119 has a smaller size at both ends of the bottom 12 than in the central region of the bottom 12 of the cooling plate 40.

Each of the mounting cartridge 111, the accommodating cartridge 117 and the covering cartridge 119 has a rectangular-shaped cell exposing hole 113 disposed in a side wall thereof, and a fin mounting frame 115 protruding from the side wall along an edge of the cell exposing hole 113. Here, the first cooling fin 80A covers the cell exposing hole 113 of the mounting cartridge 111 by the body 52, and is hooked onto the fin mounting frame 115 of the mounting cartridge 111 by the first extension part 58, and supports a lower portion of the mounting cartridge 111 by the second extension portion 70.

Similarly, each of the second to fifth cooling fins 80B, 80C, 80D, 80E covers the cell exposing hole 113 of the accommodating cartridge 117 or the covering cartridge 119 by the body 52, and is hooked onto the fin mounting frame 115 of the accommodating cartridge 117 or the covering cartridge 119 by the first extension part 58, and supports a lower portion of the accommodating cartridge 117 or the covering cartridge 119 by the second extension part 70.

Here, the first cartridge coupling part 54 and the second cartridge coupling part 56 of each of the first to fifth cooling fins 80A, 80B, 80C, 80D, 80E are hooked onto the fin mounting frame 115 of the mounting cartridge 111, the accommodating cartridge 117 or the covering cartridge 119, and are screw-coupled with the mounting cartridge 111, the accommodating cartridge 117 or the covering cartridge 119 by a screw member 57 being inserted into the coupling holes 53.

Each of the mounting cartridge 111, the accommodating cartridge 117 and the covering cartridge 119 is disposed on the second extension part 70 of the first cooling fin 80A, the second cooling fin 80B, the third cooling fin 80C, the fourth cooling fin 80D or the fifth cooling fin 80E, and contacts the second extension part 70.

The mounting cartridge 111 directly neighboring the first buffer part 28 is aligned with the first cartridge align part 22 and the second cartridge align part 26 of the first buffer part 28, and the covering cartridge 119 directly neighboring the second buffer part 38 is aligned with the second cartridge align part 32 and the first cartridge align part 36 of the second buffer part 38. Each of the mounting cartridge 111, the accommodating cartridge 117 and the covering cartridge 119 has long bolt holes 116 in corners thereof.

Meanwhile, the battery cell structure 110 consists of a plurality of battery cells 105, and more specifically, the battery cell structure 110 consists of one battery cell 105 disposed inside the mounting cartridge 111, and two battery cells 105 disposed between each pair of accommodating and covering cartridges 117, 119. A pouch exterior material of each battery cell 105 is bent at both edges of a sealing part. Each battery cell 105 has two electrode leads facing one direction.

Hereinafter, a preparation method of a battery module of the present disclosure will be explained with reference to Figs. 1 to 11.

Referring to Figs. 1 to 11, the cooling plate 40 and the cooling structure 90 may be prepared. The cooling plate 40 may have the first buffer part 28 and the second buffer part 38 on an edge at one side and on an edge at another side thereof, respectively, three first line convex bodies 14 between the first buffer part 28 and the second buffer part 38, and two second line convex bodies 16 between the three first line convex bodies 14.

The cooling fin structure 90 may have the first cooling fin 80A, the second cooling fin 80B, the first to fifth cooling assembly fins 81, 83, 85, 87, 88 and the fifth cooling fin 80E. Next, the first cooling fin 80A, the second cooling fin 80B, the first to fifth cooling assembly fins 81, 83, 85, 87, 88 and the fifth cooling fin 80E may be disposed in sequential order from an edge at one side of the cooling plate 40 towards an edge at another side thereof, and joined to the cooling plate 40 using an adhesive or by welding.

Here, each of the first to fifth cooling assembly fins 81, 83, 85, 87, 88 may have one pair of third and fourth cooling fins 80C, 80D joined to each other using an adhesive or by welding. Since the second extension part 70 of each of the first to fifth cooling fins 80A, 80B, 80C, 80D, 80E is divided into a plurality of slits, it is possible to form an excellent matching configuration corresponding to curves on the contact portion of the first line convex body 14, the second line convex body 16, the first buffer part 28 or the second buffer part 38.

The cooling plate 40 and the cooling fin structure 90 may compose the cooling module 95. Next, the battery cell structure 110 and the cartridge structure 130 may be prepared. The battery cell structure 110 may have a plurality of battery cells 105. The cartridge structure 130 may have the mounting cartridge 111 and the first to sixth cartridges 120A, 120B, 120C, 120D, 120E, 120F. Next, one battery cell 105 is inserted into the mounting cartridge 111, and two battery cells 105 are inserted into the first to sixth cartridges 120A, 120B, 120C, 120D, 120E, 120F, respectively.

The battery cell structure 110 and the cartridge structure 130 may compose the battery assembly 135. After the cooling module 95 and the battery assembly 135 are configured, the mounting cartridge 111 and the first to sixth cartridges 120A, 120B, 120C, 120D, 120E, 120F may be inserted between the first cooling fin 80A, the second cooling fin 80B, the first to fifth cooling assembly fins 81, 83, 85, 87, 88 and the fifth cooling fin 80E.

Next, each of the first to fifth cooling fins 80A, 80B, 80C, 80D, 80E may be screw-coupled with the mounting cartridge 111, the accommodating cartridge 117 or the covering cartridge 119 through the coupling holes 53 of the first cartridge coupling part 54 and the second cartridge coupling part 56.

Each of the mounting cartridge 111 and the first to sixth cartridges 120A, 120B, 120C, 120D, 120E, 120F inserts the long bolts into the long bolt holes 116 on the side wall, and the long bolt may be screw-coupled with the mounting cartridge 111, the accommodating cartridge 117 or the covering cartridge 119.

The cooling module 95 and the battery assembly 135 may compose the battery module 140. Further, the battery assembly 135 may be screw-coupled with at least one another battery module (not illustrated in the drawings herein) through the first module coupling holes H1 of the first cartridge align parts 22, 36 and the second module coupling holes H2 of the first line convex bodies 16 on the cooling plate 40.

The present disclosure has been described in detail. However, it should be understood that the detailed description and specific examples, while indicating preferred embodiments of the disclosure, are given by way of illustration only, and various changes and modifications within the scope of the disclosure will become apparent to those skilled in the art from this detailed description.

### [Description of reference numerals]

52; body, 53; coupling hole
54; first cartridge coupling part, 56; second cartridge coupling part
58; first extension part, 62; slit
64; impact buffering part, 66; connecting part
68; plate contact part, 70; second extension part
80; cooling fin

## Claims

1. A cooling fin (80) comprising:
a body (52) having a rectangular panel shape;
a first extension part (58) protruding from an edge of an upper portion of the body (52) and extending in one direction at a right angle with respect to the body (52); and
a second extension part (70) protruding from an edge of a lower portion of the body (52) and extending in one direction in a step form with respect to the body (52), wherein the second extension part (70) is divided into a plurality of slits (62),
wherein the second extension part (70) comprises impact buffer parts (64), connecting parts (66) and plate contact parts (68) disposed in sequential order by level in the step form of the second extension part (70) from the body (52) towards the lower part of the body (52),
**characterized in that**
the impact buffer part (64), the connecting part (66) and the plate contact part (68) disposed along each of the slits (62) form different angles with each other with respect to the body (52).

2. The cooling fin (80) of claim 1, wherein surfaces of the body (52) facing the one direction and surfaces of the body (52) facing another direction that is opposite to the one direction are flat-shaped.

3. The cooling fin (80) of claim 1, wherein the first extension part (58) is disposed along the edge of the upper portion of the body (52) and has an identical size as a width of the edge of the upper portion, and
the second extension part (70) is disposed along the edge of the lower portion of the body (52) and has an identical size as a width of the edge of the lower portion.

4. The cooling fin (80) of claim 1, wherein each of the slits (62) forms a straight line shape when seen from the another direction.

5. The cooling fin (80) of claim 1, wherein each of the slits (62) extends beyond the second extension part (70) and the edge of the lower portion of the body (52) towards the body (52).

6. The cooling fin (80) of claim 1, wherein each of the slits (62) has a smaller size than a width of the impact buffer part (64), the connecting part (66) or the plate contact part (68) along the edge of the lower portion of the body (52).

7. The cooling fin (80) of claim 1, wherein each of the slits (62) is open at an end of the plate contact part (68), and blocked on a periphery of the edge of the lower portion of the body (52).

8. The cooling fin (80) of claim 1, further comprising a first cartridge coupling part (54) and a second cartridge coupling part (56) disposed on a left edge of the body (52) and on a right edge of the body (52), respectively, between the edge of the lower portion of the body (52) and the edge of the upper portion of the body (52),
wherein the first extension part (58), the second extension part (70), the first cartridge coupling part (54) and the second cartridge coupling part (56) limit a groove on the body (52) in the one direction.

9. A cooling module (95) comprising:
a cooling plate (40) comprising a bottom (12) having a plurality of line convex bodies (14, 16) in a central region thereof, and a first buffer part (28) and a second buffer part (38) each disposed at either edge of the bottom (12), the first buffer part (28) and the second buffer part (38) protruding towards an upper portion of the bottom (12) and being generally parallel to a first line convex body and a second line convex body; and
a plurality of cooling fins disposed on the plate (40) such that they are fixated to the first and second buffer parts (28, 38) and to the plurality of line convex bodies (14, 16),
wherein each of the cooling fins is as defined in claim 1.

10. A battery module (140) comprising the cooling module (95) as defined in claim 9 and a battery assembly (135).

## Patentansprüche

1. Kühlrippe (80), umfassend:
einen Körper (52), welcher eine rechteckige Paneel-Form aufweist;
einen ersten Erstreckungsteil (58), welcher von einem Rand eines oberen Abschnitts des Körpers (52) vorsteht und sich in einer Richtung unter einem rechten Winkel in Bezug auf den Körper (52) erstreckt; und
einen zweiten Erstreckungsteil (70), welcher von einem Rand eines unteren Abschnitts des Körpers (52) vorsteht und sich in einer Richtung in einer Schrittform in Bezug auf den Körper (52) erstreckt,
wobei der zweite Erstreckungsteil (70) in eine Mehrzahl von Schlitzen (62) unterteilt ist,
wobei der zweite Erstreckungsteil (70) Einschlag-Pufferteile (64),
Verbindungsteile (66) und Plattenkontaktteile (68) umfasst, welche in einer sequenziellen Anordnung je Niveau in der Schrittform des ersten Erweiterungsteils (70) von dem Körper (52) in Richtung des unteren Teils des Körpers (52) angeordnet sind,
**dadurch gekennzeichnet, dass**
der Einschlag-Pufferteil (64), der Verbindungsteil (66) und der Plattenkontaktteil (68), welche entlang jedem der Schlitze (62) angeordnet sind, verschiedene Winkel miteinander in Bezug auf den Körper (52) bilden.

2. Kühlrippe (80) nach Anspruch 1, wobei Flächen des Körpers (52), welche zu der einen Richtung weisen, und Flächen des Körpers (52), welche zu einer anderen Richtung weisen, welche zu der einen Richtung entgegengesetzt ist, flachförmig sind.

3. Kühlrippe (80) nach Anspruch 1, wobei der erste Erstreckungsteil (58) entlang des Rands des oberen Abschnitts des Körpers (52) angeordnet ist und eine identische Größe aufweist wie eine Breite des Rands des oberen Abschnitts, und
der zweite Erstreckungsteil (70) entlang des Rands des unteren Abschnitts des Körpers (52) angeordnet ist und eine identische Größe aufweist wie eine Breite des Rands des unteren Abschnitts.

4. Kühlrippe (80) nach Anspruch 1, wobei jeder der Schlitze (62) eine gerade Linienform bildet, wenn von der anderen Richtung gesehen.

5. Kühlrippe (80) nach Anspruch 1, wobei sich jeder der Schlitze (62) über den zweiten Erstreckungsteil (70) und den Rand des unteren Abschnitts des Körpers (52) hinaus in Richtung des Körpers (52) erstreckt.

6. Kühlrippe (80) nach Anspruch 1, wobei jeder der Schlitze (62) eine kleinere Größe aufweist als eine Breite des Einschlag-Pufferteils (64), des Verbindungsteils (66) oder des Plattenkontaktteils (68) entlang des Rands des unteren Abschnitts des Körpers (52).

7. Kühlrippe (80) nach Anspruch 1, wobei jeder der Schlitze (62) an einem Ende des Plattenkontaktteils (68) offen ist und an einem Umfang des Rands des unteren Abschnitts des Körpers (52) blockiert ist.

8. Kühlrippe (80) nach Anspruch 1, ferner umfassend einen ersten Einsatz-Kopplungsteil (54) und einen zweiten Einsatz-Kopplungsteil (56), welche an einem linken Rand des Körpers (52) bzw. an einem rechten Rand des Körpers (52) zwischen dem Rand des unteren Abschnitts des Körpers (52) und dem Rand des oberen Abschnitts des Körpers (52) angeordnet sind,
wobei der erste Erstreckungsteil (58), der zweite Erstreckungsteil (70), der erste Einsatz-Kopplungsteil (54) und der zweite Einsatz-Kopplungsteil (56) eine Nut an dem Körper (52) in der einen Richtung begrenzen.

9. Kühlmodul (95), umfassend:
eine Kühlplatte (40), umfassend einen Boden (12), welcher eine Mehrzahl von Linien-Konvex-Körpern (14, 16) in einem zentralen Bereich davon aufweist, und einen ersten Pufferteil (28) und einen zweiten Pufferteil (38), welche jeweils an einem jeweiligen Rand des Bodens (12) angeordnet sind, wobei der erste Pufferteil (28) und der zweite Pufferteil (38) in Richtung eines oberen Abschnitts des Bodens (12) vorstehen und im Wesentlichen parallel zu einem ersten Linien-Konvex-Körper und einem zweiten Linien-Konvex-Körper sind; und
eine Mehrzahl von Kühlrippen, welche an der Platte (40) derart angeordnet sind, dass sie an den ersten und den zweiten Pufferteil (28, 38) und an die Mehrzahl von Linien-Konvex-Körpern (14, 16) befestigt sind,
wobei jede der Kühlrippen wie in Anspruch 1 definiert ist.

10. Batteriemodul (140), umfassend das Kühlmodul (95) wie in Anspruch 9 definiert und eine Batterieanordnung (135).

## Revendications

1. Ailette de refroidissement (80) comprenant :
un corps (52) ayant une forme de panneau rectangulaire ;
une première partie d'extension (58) faisant saillie depuis un bord d'une portion supérieure du corps (52) et s'étendant dans une direction à angle droit par rapport au corps (52) ; et
une seconde partie d'extension (70) faisant saillie depuis un bord d'une portion inférieure du corps (52) et s'étendant dans une direction en une forme de décrochement par rapport au corps (52),
dans laquelle la seconde partie d'extension (70) est divisée en une pluralité de fentes (62),
dans laquelle la seconde partie d'extension (70) comprend des parties d'amortissement de choc (64), des parties de raccordement (66) et des parties de contact de plaque (68) disposées en ordre séquentiel par niveau dans la forme de décrochement de la seconde partie d'extension (70) depuis le corps (52) vers la partie inférieure du corps (52),
**caractérisée en ce que**
la partie d'amortissement de choc (64), la partie de raccordement (66) et la partie de contact de plaque (68) disposées le long de chacune des fentes (62) forment des angles différents les unes avec les autres par rapport au corps (52).

2. Ailette de refroidissement (80) selon la revendication 1, dans laquelle des surfaces du corps (52) faisant face à la direction et des surfaces du corps (52) faisant face à une autre direction qui est opposée à la direction sont de forme plate.

3. Ailette de refroidissement (80) selon la revendication 1, dans laquelle la première partie d'extension (58) est disposée le long du bord de la portion supérieure du corps (52) et a une taille identique à une largeur du bord de la portion supérieure, et la seconde partie d'extension (70) est disposée le long du bord de la portion inférieure du corps (52) et a une taille identique à une largeur du bord de la portion inférieure.

4. Ailette de refroidissement (80) selon la revendication 1, dans laquelle chacune des fentes (62) forme une forme de ligne droite dans une vue depuis l'autre direction.

5. Ailette de refroidissement (80) selon la revendication 1, dans laquelle chacune des fentes (62) s'étend au-delà de la seconde partie d'extension (70) et du bord de la portion inférieure du corps (52) vers le corps (52).

6. Ailette de refroidissement (80) selon la revendication 1, dans laquelle chacune des fentes (62) a une taille plus petite qu'une largeur de la partie d'amortissement de choc (64), de la partie de raccordement (66) ou de la partie de contact de plaque (68) le long du bord de la portion inférieure du corps (52).

7. Ailette de refroidissement (80) selon la revendication 1, dans laquelle chacune des fentes (62) est ouverte au niveau d'une extrémité de la partie de contact de plaque (68), et bloquée sur une périphérie du bord de la portion inférieure du corps (52).

8. Ailette de refroidissement (80) selon la revendication 1, comprenant en outre une première partie d'accouplement de cartouche (54) et une seconde partie d'accouplement de cartouche (56) disposées sur un bord gauche du corps (52) et sur un bord droit du corps (52), respectivement, entre le bord de la portion inférieure du corps (52) et le bord de la portion supérieure du corps (52),
dans laquelle la première partie d'extension (58), la seconde partie d'extension (70), la première partie d'accouplement de cartouche (54) et la seconde partie d'accouplement de cartouche (56) limitent une rainure sur le corps (52) dans la direction.

9. Module de refroidissement (95) comprenant :
une plaque de refroidissement (40) comprenant un fond (12) ayant une pluralité de corps convexes de ligne (14, 16) dans une région centrale de celui-ci, et une première partie d'amortissement (28) et une seconde partie d'amortissement (38) disposées chacune au niveau de chaque bord du fond (12), la première partie d'amortissement (28) et la seconde partie d'amortissement (38) faisant saillie vers une portion supérieure du fond (12) et étant généralement parallèles à un premier corps convexe de ligne et un second corps convexe de ligne ; et
une pluralité d'ailettes de refroidissement disposées sur la plaque (40) de façon à ce qu'elles soient fixées aux première et seconde parties d'amortissement (28, 38) et à la pluralité de corps convexes de ligne (14, 16),
dans lequel chacune des ailettes de refroidissement est telle que définie à la revendication 1.

10. Module de batterie (140) comprenant le module de refroidissement (95) tel que défini à la revendication 9 et un ensemble batterie (135).
